# EUROPEAN PATENT SPECIFICATION

(11) **EP 2 646 726 B1**
(45) Date of publication and mention of the grant of the patent: **17.01.2018**
(21) Application number: 11793484.4
(22) Date of filing: 29.11.2011
(51) Int. Cl.: F16L 3/20, F16L 3/22, F16L 3/10

(54) **PIPE CLIP**
ROHRKLEMME
COLLIER DE SERRAGE

(30) Priority: 29.11.2010 GB 201020186
(43) Date of publication of application: 09.10.2013
(73) Proprietor: Rumbold, Ashley, Royston, Hertfordshire SG8 6ED (GB)
(72) Inventor: Rumbold, Ashley, Royston, Hertfordshire SG8 6ED (GB)
(74) Representative: Games, Robert Harland
(86) International application number: PCT/GB2011/052351
(87) International publication number: WO 2012/073013

(56) References cited:
- DE-A1- 3 047 973
- DE-U- 7 313 795
- DE-U1- 8 903 910
- US-A- 5 503 353
- US-A- 6 145 793

## Description

The present invention relates to a pipe clip and particularly, but not exclusively, to a pipe clip for securing a pipe to a corner of a supporting member, such as a joist.

### BACKGROUND TO THE INVENTION

It is well known to secure pipes to supporting members such as beams or joists using pipe clips. Such clips generally include a base portion, an aperture extending perpendicularly through the base portion for fastening the clip with a screw and a substantially resilient U-shaped pipe receiving portion disposed above the base portion. Usually, the fastening aperture opens in the base of the U-shaped pipe receiving portion. In use, the clip is positioned as required and fastened in place with a screw. The pipe is then pushed into the clip where it is securely held, with the pipe obscuring the head of the screw. An example of such clip is disclosed in DE7313795U. A typical problem of pipe clips is that they are positioned and secured from above and the aperture for receiving the fastening is situated below and within the pipe receiving portion, e.g. in the U-shaped pipe receiving portion. Such clips can be difficult to install when space is limited, for example, between the upper and lower timber members of prefabricated joists, or in areas close to the eaves.
It is an object of the invention to provide a pipe clip which reduces or substantially obviates the above mentioned problems.

### SUMMARY OF THE INVENTION

According to the present invention there is provided a pipe clip for securing a pipe to a supporting member, the pipe clip comprising a pipe receiving portion and a body portion and at least one aperture for receiving fixing means, the pipe receiving portion and body portion having a common substantially longitudinal central axis, the aperture being provided through the body portion in a plane substantially perpendicular to the common substantially longitudinal central axis of the body portion and pipe receiving portion, for enabling the body portion to be fastened to the side of the supporting member, characterised in that the pipe receiving portion includes a pair of curved resilient arms, free ends of the resilient arms being spaced from the body portion, spaced apart and adapted to flex radially outwards for receiving the pipe when it is pushed into the opening between the free ends of the arms,
the pipe receiving portion and the body portion are aligned about the longitudinal axis and the body portion is formed with a stepped rear face, including first and second faces substantially perpendicular to one another defining an internal corner for placing contiguous an external corner of the supporting member.

This arrangement is advantageous because it is possible to position the clip on a corner of a joist, with the pipe receiving portion extending above the joist. The clip can then be fastened from the front, i.e. to the side of the joist, which is useful when space is limited. There is typically a reasonable distance between joists, enabling an electric driver to be used to drive in a fastening screw.

Also, the pipe clip can be unfastened and the position adjusted along a joist, if needs be, with a pipe held in the pipe receiving portion, because the screw aperture is accessible.

Optionally, a pivotally mounted retaining member extends from the free end of one of the arms and is releasably fastenable to the free end of the other arm. The retaining member may be mounted about a live hinge and may lock by means of a resilient latch. This prevents a pipe from vibrating out of the arms.

A liner may be provided in the pipe receiving portion. The liner may be an anti-vibration liner which also prevents the pipe from vibrating out of the pair of curved resilient arms.

The liner may be made from a plastics material, for example, polypropylene.

A recess may be provided in one side of the body portion and a corresponding protrusion may be provided in the other side of the body portion. The recess and protrusion may form a male-female type of engagement, and may allow adjacent clips to be fastened together along a supporting member. Preferably, the protrusion is T-shaped to lock adjacent clips to one another.

The body portion and pipe receiving portion may be integrally made as one component, for example, as a plastics moulding.

Alternatively, the pipe receiving portion may be a separate component and may be moveable relative to the body portion. The pipe receiving portion may be slidably mounted relative to the body portion, for example, within the body portion. Such movement provides adjustability, for example, along the longitudinal axis of the clip.

In use, the position of the pipe receiving portion relative to the body portion can be varied. This adjusts the vertical position of the pipe, for example, relative to the upper surface of the supporting member on which the clip is located. This can be beneficial when the pipe spans successive supporting members which are not in perfect vertical alignment, thereby avoiding potential stress arising in the pipe structure due to unnecessary bending of the pipe.

An aperture may be provided longitudinally of the body portion and a tab may extend laterally outwardly from the pipe receiving portion, the tab being receivable in the aperture for limiting the movement of the pipe receiving portion within the body portion.

A locking means may be provided for locking the position of the pipe receiving portion relative to the body portion. The locking means may be a threaded screw.

Preferably, the body portion and pipe receiving portions are made from a plastics material. This means that the clip is relatively cost-effective to manufacture. Advantageously, this also facilitates an easy colour coding of the clip according to, for example, intended location or pipe diameter, because the plastics can be coloured in the manufacture of the clip.

### BRIEF DESCRIPTION OF THE DRAWINGS

For a better understanding of the present invention, and to show more clearly how it may be carried into effect, reference will now be made, by way of example only, to the accompanying drawings, in which:
Figure 1 shows a perspective rear view of a first embodiment of a clip;
Figure 2 shows a perspective front view of the clip of Figure 1 attached to a supporting member and holding a pipe;
Figure 3 shows a perspective view of two clips of the type shown in Figure 1 connected together side by side, with a protrusion of one clip mating with a corresponding recess on the other clip;
Figure 4 shows a perspective view of a second embodiment of the clip with a hinged clasp, and shows in particular the clasp moving from an open position to a closed position;
Figure 5 shows perspective view of a third embodiment of the clip with an anti-vibration liner extending around the pipe receiving portion;
Figure 6 shows a perspective front view of a fourth embodiment of the clip, which is adjustable, and shows in particular the tab and slot arrangement;
Figure 7 shows a perspective rear view of the clip of Figure 6;
Figure 8 shows a perspective front view of the clip of Figure 6 and shows in particular the clip moving from a retracted position into an extended position; and
Figures 9a to 9c shows the steps involved in mounting a pipe to a joist using one of the clips of the invention.

### DESCRIPTION OF PREFERRED EMBODIMENTS

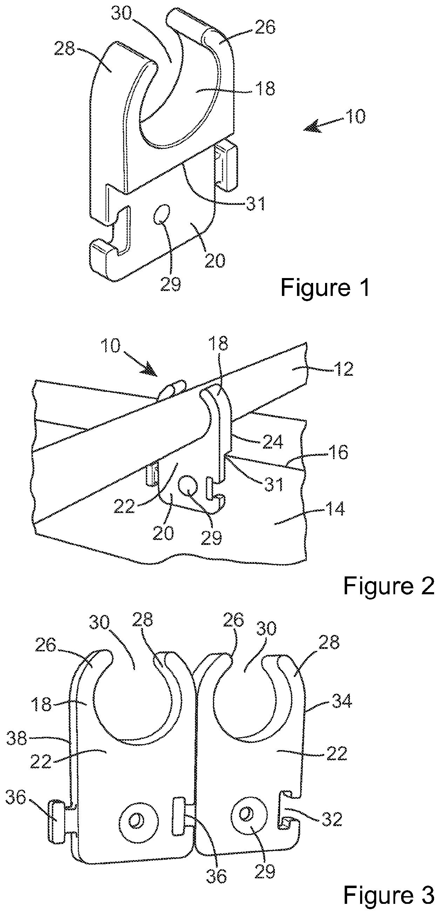

Referring firstly to Figures 1 and 2, a first embodiment of a clip is indicated generally at 10. The clip 10 is for the purpose of securing a pipe 12 to a supporting member 14 and utilises an external corner 16 of the supporting member 14. The clip 10 is integrally formed from plastics and includes a pipe receiving portion 18 and a body portion 20 extending underneath the pipe receiving portion 18, as viewed, and aligned about a longitudinal central axis. The clip 10 is substantially planar on its front face 22, but is stepped on its rear face 24 for fitting against the external corner 16, as will be described further below.

The pipe receiving portion 18 is similar to known resilient clips, in that it includes first and second curved arms 26, 28 which extend from the body portion 20 to define a partially circular aperture 30. The diameter of the aperture 30 is marginally smaller than the diameter of the pipe 12 intended to be receivable in the clip 10. The curved arms 26, 28 are resilient and flex radially outwards, when a pipe is pushed into the opening between the free ends of the arms 26, 28. Once the arms 26, 28 have extended over the maximum diameter of the pipe 12, they spring back substantially to their original rest position to secure the pipe 12 in position.

The body portion 20 is provided as a substantially planar member, with an aperture there-through 29 for fastening the clip 10 with a fixing, for example a screw fixing. The aperture extends from the front to the rear face 22, 24 of the clip and is provided with a countersink on the front face 22, for receiving a countersunk screw head. The aperture is provided substantially at the centre of the body portion. The stepped rear face 24 is formed by a face 31 extending perpendicularly away from the rear face of the body portion 20, where the body portion 20 increases in thickness. The front, rear and step faces 22, 24, 31 are substantially planar and smooth, although they may be provided with texture to facilitate grip. The thickness of the body portion 20 may be, for example, in the range of around 4 to 8mm in thickness and the pipe receiving portion 18 may be in the range of around 10 to 15mm in thickness.

Turning now to Figure 3, a recess 32 is disposed in a longitudinal side 34 of the clip 10. A corresponding protrusion 36 extends laterally outwards from an opposing side 38 of the clip 10. In use, the protrusion 36 and recess 32 engage together to lock two or more clips 10 in position adjacent to one another. This facilitates a regular array of pipes 10 aligned adjacent to one another, which is useful when pipes 10 are to be laid at one level, for example, the flow and return pipes of a heating system. The protrusion 36 and recess 32 cooperate with a tolerance fit. The protrusion and recess are T-shaped although other suitable matable and lockable forms may be used.

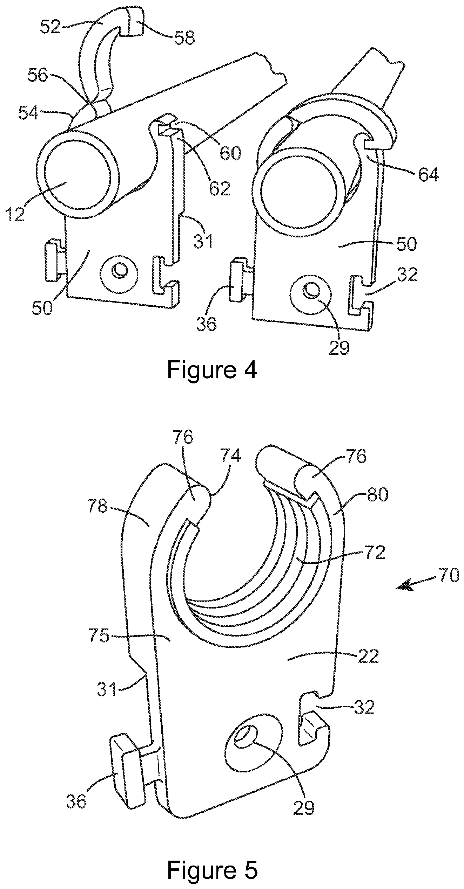

In Figure 4, a second embodiment of the clip is indicated at 50. Like parts are denoted by like references. In this embodiment, a pivotally mounted retaining member is provided as a hinged clasp 52 on the first curved arm 54 and is moveable between an open and a closed position. The clasp 52 extends from a live hinge 56. The clasp 52 has a hook 58 at its free end for engaging with a shoulder 60 on the free end of the second curved arm 62. In the open position, the clasp 52 allows access to the aperture between the curved arms 54, 62 from above. In the closed position, the clasp 52 extends from one curved arm 54 to the other curved arm 62 and is retained in the closed position with a snap fit when the hook 58 of the clasp 52 couples with the shoulder 60 on the second curved arm 62.

Also, a liner, as described in detail below, may be used on the inside of the curved arms 54, 62 of the pipe receiving portion 64.

In Figure 5, a third embodiment of the clip is indicated at 70. Like parts are denoted by like references. A foam liner 72 extends around an inner surface 74 of the pipe receiving portion 75. A stop 76 is provided at the free end of each curved arm 78, 80. The stops 76 help locate and retain the liner 72 in place. In use, the liner 72 prevents the pipe 10 from slipping through the curved arms 78, 80, for example, due to vibration of the pipe 12 caused by fluidic movement therewithin.

A clasp, as described above, may be provided to secure the pipe within the curved arms 78, 80.

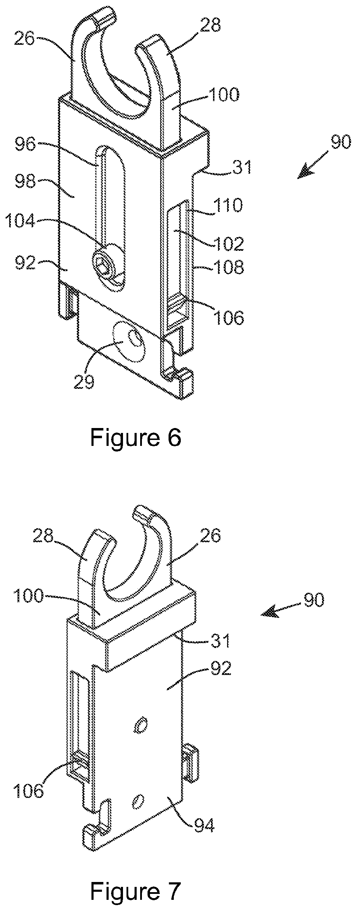

In Figures 6, 7 and 8, a fourth embodiment of the clip is indicated at 90. Again, like parts are denoted by like references. The clip 90 is adjustable in length and is moveable between a retracted position and an extended position. The clip may be fixed at any position in between the fully retracted and fully extended position. In this example, the clip is placed against the side and lower surface of the supporting member and secured in place. The clip is then extendible downwardly with respect to the supporting member. However, it is envisaged that the clip may be placed against the side of the supporting member and the upper or lower surface of a supporting member indiscriminately.

As best seen in Figure 6, the body portion 92 includes a flat rear surface 94, which is stepped at 31, where the body portion 92 increases in thickness. The step can be placed contiguous an external corner as in the previous embodiments. An aperture is provided through the body portion 92 enabling the clip 90 to be screwed in place to the side of a supporting member.

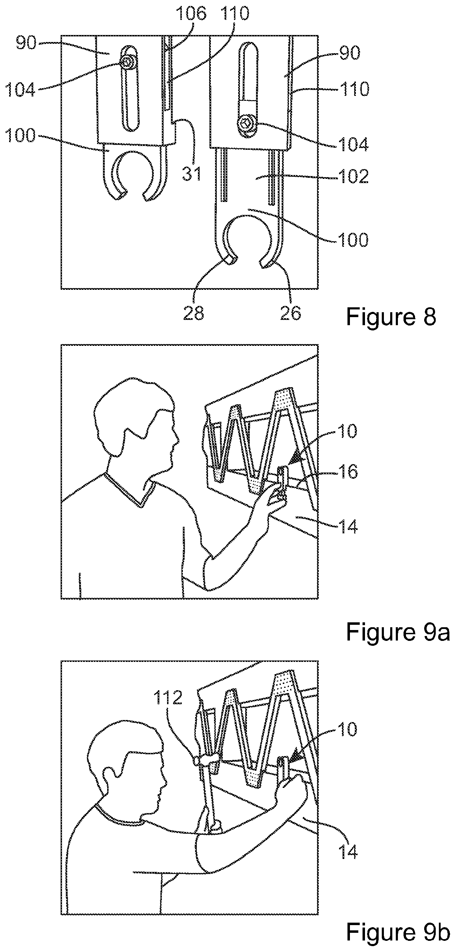

The body portion 92 encloses a chamber and an elongate aperture 96 extends along a front face 98 of the body portion 92 providing access to the chamber. The pipe receiving portion 100 is slidably receivable in the hollow body portion 92. The pipe receiving portion 100 includes a pair of curved arms (as described previously with reference to parts 26, 28) connected to a substantially rectangular body 102 (see Figure 8).

A screw 104 is detachably mounted in the rectangular body 102 and, in use, extends through the rectangular body 102 to the rear inner surface of the hollow body portion 92. The screw 104 acts as a lock and fixes the position of the pipe receiving portion 100 within the body portion 92 at any position between the maximum extended and retracted positions. A tab 106 extends laterally outwards from a side 108 of the rectangular body 102 and is receivable within an elongate aperture 110 in the body portion 92. The travel of the tab 106 within the elongate aperture 110 limits the movement and defines the maximum extension of the adjustable clip 90.

As before, a clasp, as described previously, may be provided to secure the pipe within the curved arms. A liner may also be used on the inside of the pipe receiving portion.

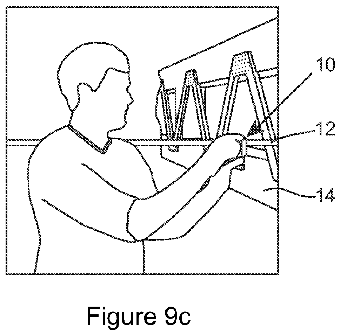

In use, as indicated in Figures 9a to 9c, the clip 10 is placed flush against the side of the supporting member 14. The rear stepped face of the clip 10 encloses the external corner 16 of the supporting member 14. (Figure 9a) In this example, the clip 10 is secured in place on the supporting member 14 using a hammer 112 and nail. (Figure 9b) The pipe 12 is passed over the curved arms 26, 28 as required and then snapped into position through the curved arms 26, 28 of the pipe receiving portion 18 (Figure 9c).

When an adjustable clip is used, the clip 90 is mounted to the supporting member 14 in the same way described above. The pipe receiving portion 100 is lengthened as required by the user manually sliding the tab 106 at the side of the clip 90. Once the desired extension is required, the screw 104 is tightened against the inner face of the body portion 92 to fix the position of the pipe receiving portion 100 relative to the body portion 92. To alter the relative position of the pipe receiving portion 100, the screw 104 is simply loosened. The pipe 10 is then snapped into position within the curved arms 26, 28. The clasp, if used, is snapped closed.

The pipe clip is easy to install even at arm's length and in inaccessible places. The clip can be used in new building installations and also in refitting old buildings. The clip saves installers time when securing pipe work to joists, beams and other supporting members.

## Claims

1. A pipe clip (10, 50, 70, 90) for securing a pipe to a supporting member, the pipe clip (10) comprising a pipe receiving portion (18) and a body portion (20) and at least one aperture (29) for receiving fixing means, the pipe receiving portion (18) and body portion (20) having a common substantially longitudinal central axis, the aperture (29) being provided through the body portion (20) in a plane substantially perpendicular to the common substantially longitudinal central axis of the body portion (20) and pipe receiving portion (18), such that, in use, the longitudinal axis of the fixing means is located in a plane substantially perpendicular to the substantially longitudinal central axis of the body portion, for enabling the body portion (20) to be fastened to the side of the supporting member (14), wherein the pipe receiving portion (18) includes a pair of curved resilient arms (26, 28), free ends of the resilient arms (26, 28) being spaced from
the body portion (20), spaced apart and adapted to flex radially outwards for receiving the pipe when it is pushed into the opening between the free ends of the arms (26, 28),
the pipe receiving portion (18) and the body portion (20) are aligned about the longitudinal axis, and
the body portion (20) is formed with a stepped rear face, including first and second faces substantially perpendicular to one another defining an internal corner for placing contiguous to an external corner (16) of the supporting member (14).

2. A pipe clip (50) as claimed in claim 1, in which a pivotally mounted retaining member (52) extends from the free end of one of the arms (54) and is releasably fastenable to the free end of the other arm (64).

3. A pipe clip (70) as claimed in claim 1 or 2, in which a liner (72) is provided in the pipe receiving portion.

4. A pipe clip (70) as claimed in claim 3, in which the liner (72) is made from a plastics material.

5. A pipe clip (10, 50, 70, 90) as claimed in any preceding claim, in which a recess (32) is provided in one side of the body portion (20) and a corresponding protrusion (36) is provided on the other side of the body portion (20).

6. A pipe clip as claimed in claim 5, in which the protrusion is T-shaped.

7. A pipe clip (10, 50, 70) as claimed in any preceding claim, in which the body portion (20) and pipe receiving portion (18) are integrally formed.

8. A pipe clip (90) as claimed in any one claim of claims 1 to 6, in which the pipe receiving portion (100) is moveable relative to the body portion (92).

9. A pipe clip (90) as claimed in claim 8, in which the pipe receiving portion (100) is slidably mounted within the body portion (92).

10. A pipe clip (90) as claimed in claim 9, in which an aperture (96) is provided longitudinally of the body portion (92) and a tab (106) extends laterally outwardly from the pipe receiving portion (100), the tab (106) being receivable in the aperture (96) for limiting the movement of the pipe receiving portion (100) within the body portion (92).

11. A pipe clip (90) as claimed in claim 9 or 10, in which a locking means (104) is provided for locking the position of the pipe receiving portion (100) relative to the body portion (92).

12. A pipe clip (10, 50, 70, 90) as claimed in any preceding claim, in which the body portion (20) and pipe receiving portions (18) are made from a plastics material.

## Patentansprüche

1. Rohrschelle (10, 50, 70, 90) zur Befestigung eines Rohrs an einem Stützglied, wobei die Rohrschelle (10) einen Teil, der ein Rohr aufnimmt, (18) und einen Körperteil (20) und mindestens einen Durchlass (29) zum Aufnehmen der Befestigungsmittel umfasst, wobei der Teil, der das Rohr aufnimmt, (18) und der Körperteil (20) eine gemeinsame, zentrale Achse wesentlich in Längsrichtung aufweisen, wobei der Durchlass (29) durch den Körperteil (20) auf einer Fläche bereitgestellt wird, die wesentlich senkrecht zur gemeinsamen, zentralen Achse, die wesentlich in Längsrichtung des Körperteils (20) und des Teils, der das Rohr aufnimmt, (18) verläuft, dies derart, dass sich die Längsachse der Befestigungsmittel bei Verwendung auf einer Fläche befindet, die wesentlich senkrecht zur zentralen Achse des Körperteils, die wesentlich in Längsrichtung verläuft, um zu ermöglichen, dass der Körperteil (20) an der Seite des Stützglieds (14) befestigt wird, wobei der Teil, der das Rohr aufnimmt,(18) ein Paar gebogener elastischer Arme (26, 28) umfasst und wobei die freien Enden der elastischen Arme (26, 28) im Abstand vom Körperteil (20) sind, im Abstand beiseite und angepasst sind, um sich radial nach außen zu biegen, um das Rohr aufzunehmen, wenn es in den Durchlass zwischen den freien Enden der Arme (26, 28) geschoben wird, der das Rohr aufnehmende Teil (18) und der Körperteil (20) um die Längsachse ausgerichtet sind und der Körperteil (20) mit einer abgesetzten Rückseite geformt ist, einschließlich erster und zweiter Seite, die zueinander wesentlich senkrecht sind und eine innere Ecke definieren, um sich angrenzend an eine äußere Ecke (16) des Stützglieds (14) zu platzieren.

2. Rohrschelle (50) gemäß Anspruch 1, bei der sich das drehbare Halteglied (52) vom freien Ende einer der Arme (54) aus erstreckt und lösbar am freien Ende des anderen Arms (64) befestigt ist.

3. Rohrschelle (70) gemäß Anspruch 1 oder 2, bei der in dem Teil, der das Rohr aufnimmt, eine Auskleidung (72) bereitgestellt wird.

4. Rohrschelle (70) gemäß Anspruch 3, bei der die Auskleidung (72) aus Kunststoffmaterial besteht.

5. Rohrschelle (10, 50, 70, 90) gemäß einem der vorstehenden Ansprüche, bei der in einer Seite des Körperteils (20) eine Aussparung (32) bereitgestellt wird und auf der anderen Seite des Körperteils (20) ein entsprechender Überstand (36) bereitgestellt wird.

6. Rohrschelle gemäß Anspruch 5, bei der der Überstand T-förmig ist.

7. Rohrschelle (10, 50, 70) gemäß einem der vorstehenden Ansprüche, bei der der Körperteil (20) und der Teil, der das Rohr aufnimmt, (18) integral geformt sind.

8. Rohrschelle (90) gemäß einem der Ansprüche 1 bis 6, bei dem der Teil, der das Rohr aufnimmt, (100) relativ zum Körperteil (92) bewegbar ist.

9. Rohrschelle (90) gemäß Anspruch 8, bei dem der Teil, der das Rohr aufnimmt, (100) im Körperteil (92) schiebbar montiert ist.

10. Rohrschelle (90) gemäß Anspruch 9, bei dem in Längsrichtung des Körperteils (92) ein Durchlass (96) bereitgestellt wird und ein Ansatz (106) sich seitlich nach außen des Teils, der das Rohr aufnimmt (100), erstreckt, der Ansatz (106) im Durchlass (96) aufgenommen werden kann, um die Bewegung des Teils, der das Rohr aufnimmt (100) im Körperteil (92) zu begrenzen.

11. Rohrschelle (90) gemäß Anspruch 9 oder 10, bei dem ein Verriegelungsmittel (104) bereitgestellt wird, um die Position des Teils, der das Rohr aufnimmt, (100) relativ zum Körperteil (92) zu verriegeln.

12. Rohrschelle (10, 50, 70, 90) gemäß einem der vorstehenden Ansprüche, bei der der Körperteil (20) und der Teil, der das Rohr aufnimmt, (18) aus Kunststoffmaterial bestehen.

## Revendications

1. Collier de serrage (10, 50, 70, 90) pour la fixation d'un tuyau sur un élément de support, le collier de serrage (10) comprenant une partie de réception du tuyau (18) et une partie de corps (20), et au moins une ouverture (29) pour la réception d'un dispositif de fixation, la partie de réception du tuyau (18) et la partie de corps (20) possédant un axe central commun substantiellement longitudinal, l'ouverture (29) étant agencée à travers la partie de corps (20) dans un plan substantiellement perpendiculaire à l'axe central commun substantiellement longitudinal de la partie de corps (20) et de la partie de réception du tuyau (18), de sorte qu'en cours d'usage l'axe longitudinal du dispositif de fixation soit situé dans un plan substantiellement perpendiculaire à l'axe central commun substantiellement longitudinal de la partie de corps, afin de permettre la fixation de la partie de corps (20) sur le côté de l'élément de support (14),
la partie de réception du tuyau (18) comprenant une paire de bras élastiques courbes (26, 28), les bouts libres des bras élastiques (26, 28) étant espacés de la partie de corps (20), espacés l'un de l'autre, et adaptés pour fléchir radialement vers l'extérieur pour recevoir le tuyau, lorsqu'on le pousse, dans l'ouverture située entre les bouts libres des bras (26, 28),
la partie de réception du tuyau (18) et la partie de corps (20) étant alignées autour de l'axe longitudinal, et
la partie de corps (20) étant réalisée avec une face postérieure étagée, comprenant des première et deuxième faces substantiellement perpendiculaires entre elles, en définissant un angle interne pour un placement contigu à un coin externe (16) de l'élément de support (14).

2. Collier de serrage (50) selon la revendication 1, dans lequel un élément de retenue monté de façon pivotante (52) s'étend du bout libre d'un des bras (54), et peut être fixé de façon amovible sur le bout libre de l'autre bras (64).

3. Collier de serrage (70) selon la revendication 1 ou 2, dans lequel un revêtement (72) est placé dans la partie de réception du tuyau.

4. Collier de serrage (70) selon la revendication 3, dans lequel le revêtement (72) est réalisé en matière plastique.

5. Collier de serrage (10, 50, 70, 90) selon une quelconque des revendications précédentes, dans lequel un évidement (32) est pratiqué dans un côté de la partie de corps (20), et une saillie correspondante (36) est placée sur l'autre côté de la partie de corps (20).

6. Collier de serrage selon la revendication 5, dans lequel la saillie est en « T ».

7. Collier de serrage (10, 50, 70) selon une quelconque des revendications précédentes, dans lequel la partie de corps (20) et la partie de réception du tuyau (18) sont réalisées de façon intégrante.

8. Collier de serrage (90) selon une quelconque des revendications 1 à 6, dans lequel la partie de réception du tuyau (100) est déplaçable relativement à la partie de corps (92).

9. Collier de serrage (90) selon la revendication 8, dans lequel la partie de réception du tuyau (100) est montée par coulissement dans la partie de corps (92).

10. Collier de serrage (90) selon la revendication 9, dans lequel une ouverture (96) est pratiquée longitudinalement à la partie du corps (92) et une patte (106) est déployée latéralement vers l'extérieur depuis la partie de réception du tuyau (100), la patte (106) pouvant s'introduire dans l'ouverture (96) pour limiter le mouvement de la partie de réception du tuyau (100) au sein de la partie de corps (92).

11. Collier de serrage (90) selon la revendication 9 ou 10, comprenant un dispositif de verrouillage (104) pour bloquer la position de la partie de réception du tuyau (100) relativement à la partie de corps (92).

12. Collier de serrage (10, 50, 70, 90) selon une quelconque des revendications précédentes, dans lequel de la partie de corps (20) et les parties de réception du tuyau (18) sont réalisées en matière plastique.
